# EUROPEAN PATENT SPECIFICATION

(11) **EP 0 533 502 B1**
(45) Date of publication and mention of the grant of the patent: **29.10.1997**
(21) Application number: 92308559.1
(22) Date of filing: 18.09.1992
(51) Int. Cl.: B66C 23/62, B66C 23/36, B62D 55/084

(54) **Carbody to crawler connection**
Verbindung des Untergestells eines Krans an die Raupenkette(n)
Connection du chassis de base d'une grue aux chenilles de traction

(30) Priority: 20.09.1991 US 762764
(43) Date of publication of application: 24.03.1993
(60) Divisional application: 96107965.4
(73) Proprietor: Manitowoc Crane Group, Inc., Reno, Nevada 89501 (US)
(72) Inventor: Petzold, Terry Lee, Kiel, Wisconsin 53042 (US)
(74) Representative: Bayliss, Geoffrey Cyril

(56) References cited:
- FR-A- 2 255 252
- US-A- 2 375 264
- US-A- 4 000 784
- US-A- 4 469 186

## Description

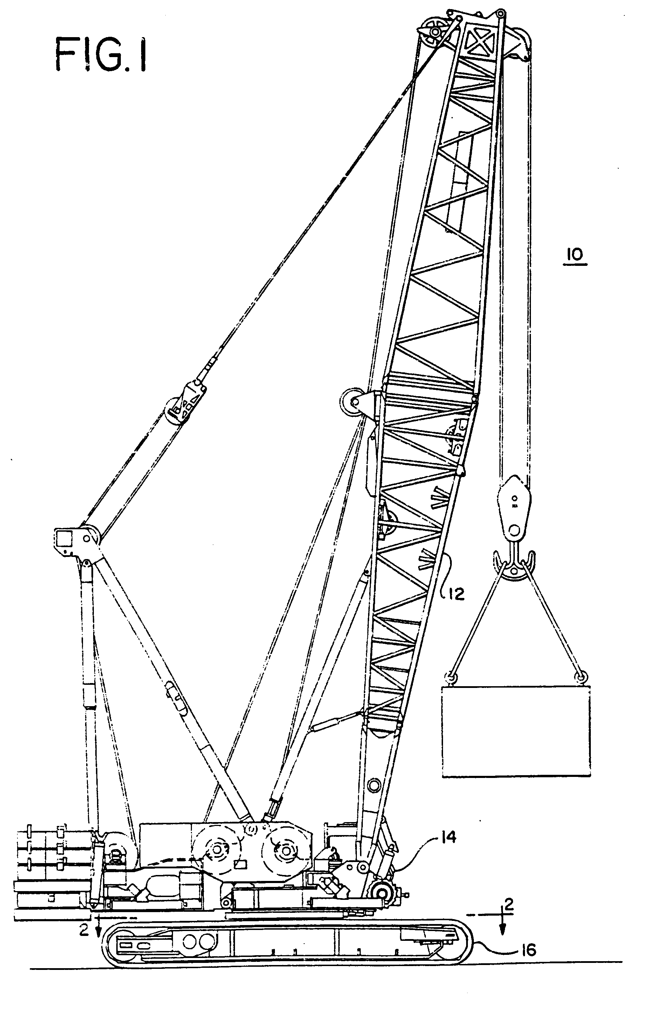

The present invention generally relates to crawler cranes. Specifically it relates to the connection between the carbody and the crawler of such a crane. A crawler crane is a heavy duty machine which is used to transport heavy loads, often exceeding 100 tons, from one place to another at a work site. As illustrated in FIG. 1, a crawler crane 10 basically has four main components: (1) a superstructure or boom 12; (2) a cab 14; (3) a set of crawlers 16; and (4) a carbody 18. The crane superstructure 12 is connected to the cab 14 at one end and extends into the air above the cab structure. The crane superstructure also comprises a cable system used to raise and lower the top end of the superstructure relative to the ground. Furthermore, the cable system comprises a movable cable and hook attached to one end thereof enabling the lifting of an object (not shown) from the ground into the air.

As mentioned previously, the crane superstructure 12 is attached to a cab 14. The cab 14 houses an operator and an engine. From the cab 14 a human operator is able to control the various cables to raise or lower the superstructure 12 or an object. The cab 14 is movably positioned on a carbody 18 such that it is capable of rotating on the carbody. From inside the cab a human operator is able to control the amount of rotation of the cab.

The carbody 18 is also connected to a pair of crawlers 16. Each crawler 16 consists of a loop-like track which is powered by a hydraulic engine. Upon activation of the hydraulic engines by the operator the crane is able to move on the ground. When all four components of a crawler crane are in place the machine becomes formidable in size. For example, crawler cranes with base ratings exceeding 100 tons typically have an operating weight of approximately 80% of the base rating. Such crawler cranes have track gauges ranging from 15 to 24 feet and overall track lengths of 20 to 30 feet. Due to their huge size, crawler cranes usually only travel small distances at a work site. For large distances it is necessary to break down the crawler crane into individual components to allow for highway transportability.

It is well known to separate the pair of crawlers 16 from the carbody 18 when the crawler crane is broken down for transportation. This separation lessens the total weight, because each crawler 16 is typically approximately 12% of the crane's operating weight. The separation of the crawlers 16 reduces the width of the carbody 18 to within acceptable transport limits.

Besides being able to have the crawler crane broken down into its constituent parts, it is important to have the machine withstand the various forces and loads present during everyday operation at the work site. In particular, it is important that the connection between the carbody 18 and the crawlers 16 is able to withstand such forces as: (1) the crawler crane's self weight; (2) the loads applied to the hook; (3) tractive effort forces produced by the lateral motion of the crane; and (4) turning forces which result from the turning of the crane by the tracks.

In the past the forces at the connection between the carbody 18 and crawler 16 were dealt with by either: (1) using bolts to connect the carbody to the crawler; or (2) extending the carbody through the side frames of the crawlers.

Other attempts at achieving a strong carbody to crawler connection, while at the same time having a simple disconnect system, can be seen with a brief review of the prior art.

U.S. Patent No. 1,705,578 by Lichtenberg discloses using vertical bolts to secure a clamp of the carbody to the axles of a pair of traction devices. The ′578 patent discloses another embodiment where horizontal bolts are used to connect the carbody to the traction device frame.

U.S. Patent No. 3,712,398 by Althaus discloses a crawler connection moving inside of a carbody cavity to provide an adjustable track width.

U.S. Patent No. 3,757,881 by Short et al. discloses placing a pin in aligned apertures of the carbody and the crawler.

U.S. Patent No. 4,000,784 by Morrow, Sr. et al. discloses a transverse beam 16 having a hook pin 99 which engages a hook opening of the carbody. The beam 16 also has openings 101 which are aligned with openings 94 of the carbody and connection is accomplished by placing a pin through the aligned openings. Beam 16 further possesses horizontal openings 109 which are aligned with an aperture of a horizontal plate 106 of the crawler. Again, pins are inserted through the aligned apertures to connect the beam 16 to the crawler 18. The ′784 patent's system of connecting a carbody to a crawler is preferably used in U.S. Patent No. 4,195,740 by Beduhn et al.

U.S. Patent No. 4,014,400 by Cline et al. discloses a bolt system for providing a connection between the carbody and crawler. In another embodiment, the ′400 patent discloses a connection where the crawler connection is a wedge which overlaps a wedge-like engaging piece connected to the carbody. The wedges are then longitudinally aligned with each other by a threaded bolt and nut so that the connection is tightened.

U.S. Patent No. 4,266,679 by Juergens discloses using vertical pins to connect an arm to a crawler attachment 48′.

U.S. Patent No. 4,341,276 by Furuichi discloses using horizontal pins to connect a carbody to a crawler.

U.S. Patent No. 4,469,186 by Goodwine employs a horizontal hook pin 22 to engage a hook opening connected to the carbody. Once the crawler pivots against a stop of the carbody, the opening 24 of the crawler mounting structure 20 is aligned with the aperture 33 of the base frame 12. Then pin 34 is inserted through both holes 24 and 33 to securely connect the base frame to the crawler.

The use of bolts is shown in the American Hoist and Derrick Company's Series 1000 crane which uses four keeper bolts in connecting the carbody to the crawler.

On the other hand, the practice of extending the carbody through the side frames can be seen with the Manitowoc Model 4100 crawler crane. By extending the carbody through the side frames, the vertical forces from the crane's self weight and hook load are transferred directly into the side frames. The 4100 model captures the tractive effort and turning forces by using bolts at the connection. Another way for coping with tractive effort and turning forces is to use large dowels and wedge packs, or round carbody members fitting into machined housings in the side frame. Another example of extending the car frame through the side frame is seen in U.S. Patent No. 3,036,650 by Cimino.

The extended carbody design has several shortcomings including:
1. Self installation of the crawler assembly is difficult as machine surfaces must be aligned. Once aligned, the crawler assembly must be moved laterally to its final position.
2. A means to carry the tractive effort and turning forces is required. When the unit goes over uneven terrain a means to lock the crawler to the carbody is required.
3. A hole is required in the side frame to accept the carbody extension. The hole is located at the maximum bending moment in the side frame and so additional structure around the hole is required to compensate for the opening.
4. Large mating surfaces require accurate machining with very large machine tools and the associated manufacturing costs.

These shortcomings have been addressed by Grove Manufacturing, which has introduced the HL150C crawler crane with the carbody to crawler connection external to the side frame structure. The HL150C model has two manually locked wedges at the bottom of each carbody arm. At the top of each arm is a square or octagon shaped connector which engages a v-shaped notch. Once the top connector is in place, the bottom wedges are driven through the bottom holes of the arm. It is believed that the tractive effort force is transmitted to the carbody through the wedge. The HL150C connection system requires three surfaces to be simultaneously aligned. In addition it is hard to manufacture the interlocking pieces to ensure a tight fit when the pieces are engaging each other. A similar wedge connection system is disclosed in U.S. Patent No. 4,625,820 by Christian.

In view of the prior art it is apparent that there are various problems to be overcome. In particular, prior art crawler cranes are incapable of attaching a crawler to a carbody in a matter of seconds. Secondly, prior art crawler cranes do not possess a simple connection design which is easily manufactured and has a tight fit. Third, prior art crawler cranes do not possess a simple connection design to effectively handle the various loads present in a crawler crane environment. Fourth, there is a need for a carbody-crawler connection to carry tractive effort and turning forces. The present invention presents such a simple design to solve at least the problems discussed above.

The present invention relates to a novel method and apparatus for connecting a carbody to a crawler as set out in claims 1 and 21 respectively, the preambles of which are based upon US 4469186 discussed previously. In one aspect of the invention, the connecting apparatus comprises a vertical pin and a horizontal pin. The vertical pin engages an aperture in the crawler and the horizontal pin is inserted through apertures present in the carbody ad crawler which are aligned with each other.

In another aspect of the invention, the vertical pin provides a pivot point by which the crawler is positioned above and lowered so that the crawler rotates about the pivot point until the crawler abuts a rotational stop. Once the crawler abuts the rotational stop, the horizontal pins are inserted in the aligned apertures of the crawler and the carbody.

The above-described connecting apparatus and method provide several advantages. For example, the connection apparatus provides a unique coupling of vertical and horizontal pins to carry the various forces produced by the crane, such as (1) shear forces from the crane's own weight, (2) the bending moment caused by the offset between the connection and the centerline of the truck, (3) longitudinal shear forces caused by the tractive movement of the crane, and (4) turning forces caused by the crane turning by using the crawlers. The above-described invention avoids having a hole in the side of the crawler and so additional structure around the holes is not required.

Another advantage of the invention is the simplicity of the connection arrangement. The invention uses simple pieces such as pins, horizontal plates and vertical plates to connect the carbody and crawler. These simple pieces are easy to manufacture and to align with each other.

Ease of alignment and connection is another advantage of the present invention. The invention employs a vertical pin to carry various forces and to act as a pivoting element. The crawler is aligned over the vertical pin and lowered into a final position where the horizontal pins can be inserted. During the lowering process the crawler pivots about the vertical pin and the resulting aligning process is accomplished in a matter of seconds.

The above advantages of the present invention will be further understood upon consideration of the following detailed description of preferred embodiments of the invention taken in conjunction with the accompanying drawings, in which:
FIG. 1 is a side view of a crawler crane employing the carbody-crawler crane connection of the present invention;
FIG. 2 is a top view schematic drawing of the carbody and a pair of crawlers when connected parallel to each other in a first embodiment taken roughly along line 2-2 of FIG. 1;
FIG. 3 is a side view schematic drawing of the connection located at the upper right arm of FIG. 2;
FIG. 4 is a cross-sectional drawing taken along line 4-4 of FIG. 3;
FIG. 5 is a cross-sectional drawing of FIG. 3 along line 5-5 of FIG. 3;
FIG. 6 is a top view schematic drawing of the lower right arm of the carbody when the carbody and crawler are connected at an angle with respect to each other;
FIG. 7 is a side view schematic drawing taken along line 7-7 of FIG. 6;
FIG. 8 is a cross-sectional view similar to FIG. 3 of a second embodiment of the present invention;
FIG. 9 is an expanded view of the contact made between a bearing surface element and the connection in FIG. 8;
FIG. 10 is a schematic drawing of an actuator in a non-engaging mode in the embodiment of FIG. 8; and
FIG. 11 is a schematic drawing of an actuator in an engaging mode in the embodiment of FIG. 8.

The preferred embodiment of the present invention relates to a self-assembling crane.

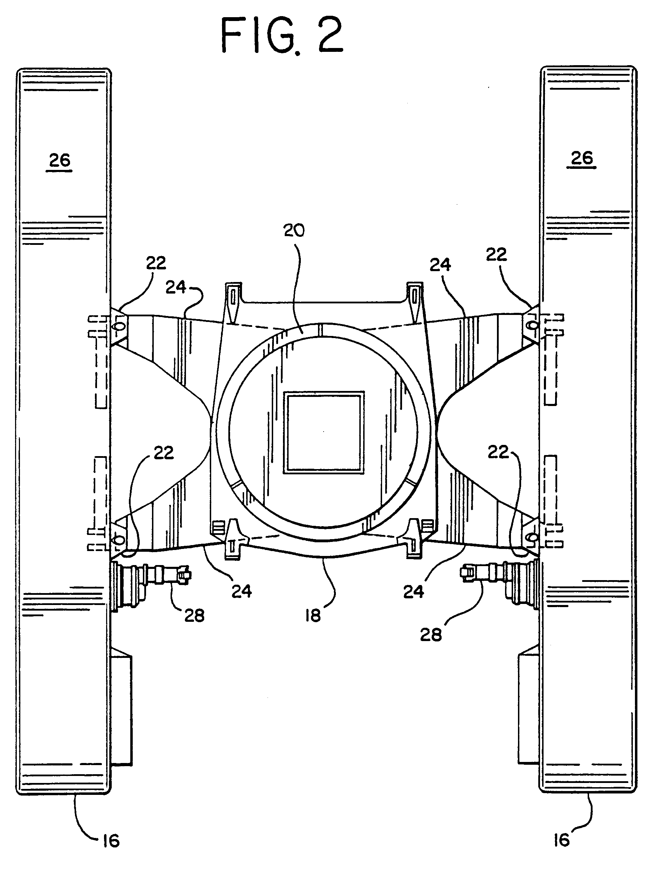

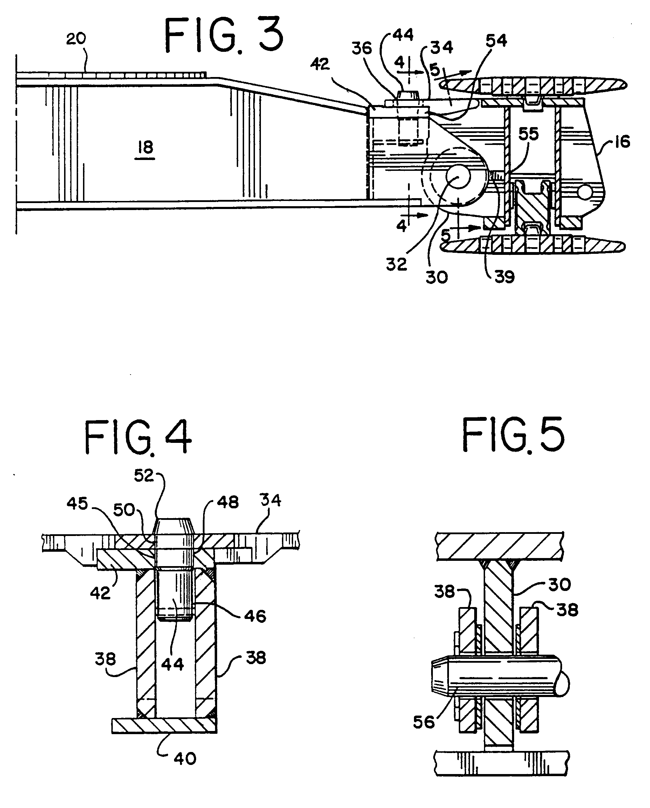

The present invention will now be described with relation to applications particularly adapted for use in crawler cranes. In particular, with reference to Fig. 2, the present invention pertains to the detachable connector 22 located between the carbody 18 of a crane and a pair of crawlers 16. Connector 22 is used to connect the carbody 18 to the crawler 16 at an operational position as shown in FIGS. 2 and 3. When one looks at several views of the connector as shown in FIGS. 2 and 3, a thorough understanding of the first preferred embodiments of the invention is possible. In Figs. 2 and 3, a carbody 18 for a heavy machine such as a crane is shown. The carbody has a swing bearing 20 which enables a crane upper works, shown in Fig. 1, to rotate on the carbody. The carbody 18 has four arms 24 extending therefrom. Two arms on each side of the carbody 18 are connected to a single crawler 16. Crawler 16 comprises a longitudinal frame assembly which houses two rotatable cog-like wheels. The cog-like wheels intermesh with a loop-like track 26 positioned above the longitudinal frame. Rotation of the wheels results in the movement of the track. Each set of wheels is rotated by hydraulic motors 28. Though the description above makes reference to crawlers it is equally applicable to other modes of translational motion such as independently powered wheels.

Each crawler frame assembly comprises two connectors 22 to connect the crawler to the carbody. The connectors 22 preferably consist of a single female receiving member contained in a plane or a vertical plate with an aperture such as cross plate extension 30 extending through longitudinal webs of the frame assembly located at the connector location. The cross plate extension 30 contains a hole 32. Located above and perpendicular to the plane of cross plate extension 30 is a section attached to the carbody 18 such as horizontal crawler top plate section 34 or another female receiving member such as horizontal crawler top plate section 34 which possesses a hole 36 which, in the preferred embodiment, is transversely elongated.

The cross plate extension 30 and crawler top plate section 34 both provide the necessary coupling to connect the crawler to the carbody. The coupling is accomplished by the connector 22 located at the end of each of the arms 24. The connector at each carbody arm consists of a pair of female receiving members or vertical plates having an aperture such as vertically positioned cross plates 38 which are attached to the carbody. The apertures of cross plates 38 are aligned with the aperture of cross plate extension 30 when the carbody is connected to said carbody in its operational position. Each cross plate has a hole wherein each hole is axially aligned with each other. Furthermore, each cross plate 38 has a stop 39 which is symmetrically positioned with respect to a horizontal line bisecting hole 32. The stop 39 engages a stop surface 55 of the crawler 16. The two cross plates 38 are separated by a distance such that cross plate extension 30 extending from the crawler side frame snugly fits between both cross plates 38. As seen in Fig. 4, cross plates 38 are structurally connected to each other by a bottom plate 40 and either a section attached to the carbody 18 such as horizontal carbody lug 42 or a horizontal female receiving member such as horizontal carbody lug 42 wherein each supports a male attachment device such as a vertical pin 44. Note that the crawler cross plate extension 34 overlaps the horizontal carbody lug 42 and that lug 42 has a flat bearing surface 54 to support crawler cross plate extension resulting in the bearing surface 54 transmitting compressive loads between the carbody and the crawler.

Carbody lug 42 possesses a hole 45 which constitutes a female attachment device with a diameter d which is centered above the space between plates 38. Vertical pin 44, which is cylindrical in shape and has four sections of varying diameters, is located in hole 45. Pin 44 has a lower cylindrical section 46 having a diameter less than d. Next the pin has another cylindrical section 48 having a diameter d and a length equal to the thickness of the horizontal carbody lug 42 so as to fit in the hole exactly. The pin 44 then has another cylindrical section 50 which has a diameter greater than d and a length equal to the thickness of the crawler top plate extension 34. Section 50 rests on top of horizontal carbody lug 42. Finally, pin 44 has a chamfered top section 52 which has the shape of a frustrum of a right circular cone.

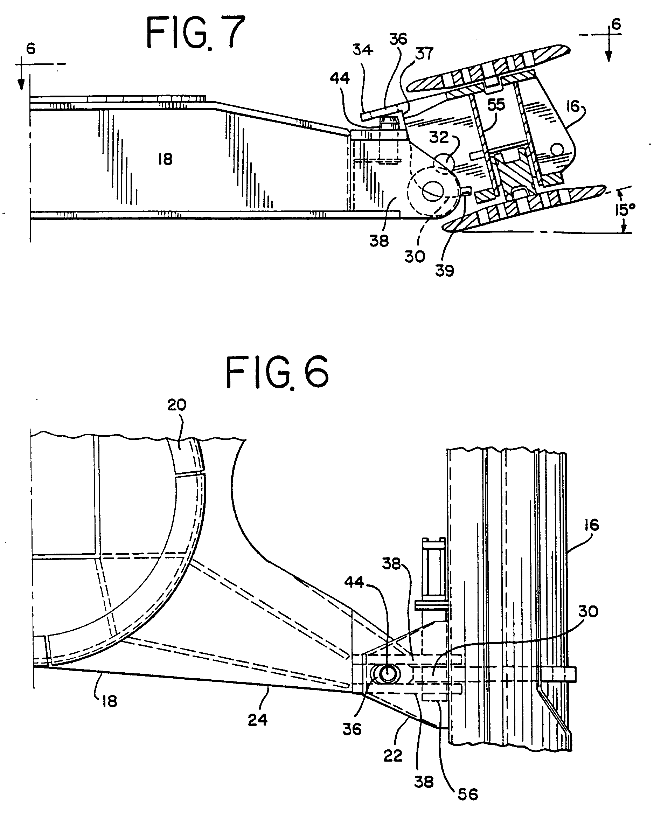

As seen in Figs. 3 and 4, when the crawler and carbody are connected in a parallel and locked operational alignment position with respect to each other, the crawler top plate section 34 and its hole 36 engage the vertical pin 44. In the locked position the crawler top plate section 34 makes flush contact with the top surface of horizontal carbody lug 42 and with a bearing surface 54 of lug 42 such that the bearing surface 54 is parallel with the axis of pin 44. In a first embodiment illustrated in Figs. 3 and 7, the crawler top plate section 34 has a shoulder 37 formed in its bottom face, the shoulder 37 comprising a vertical section which abuts a bearing surface 54 formed on the end of the horizontal carbody lug 42. The abutting orientation of (1) the bearing surface 54 with shoulder 37 of crawler top plate section 34 and (2) the stop 39 with the crawler stop surface 55 results in all of the holes of plates 30 and 38 to be aligned with each other as shown in Fig. 3.

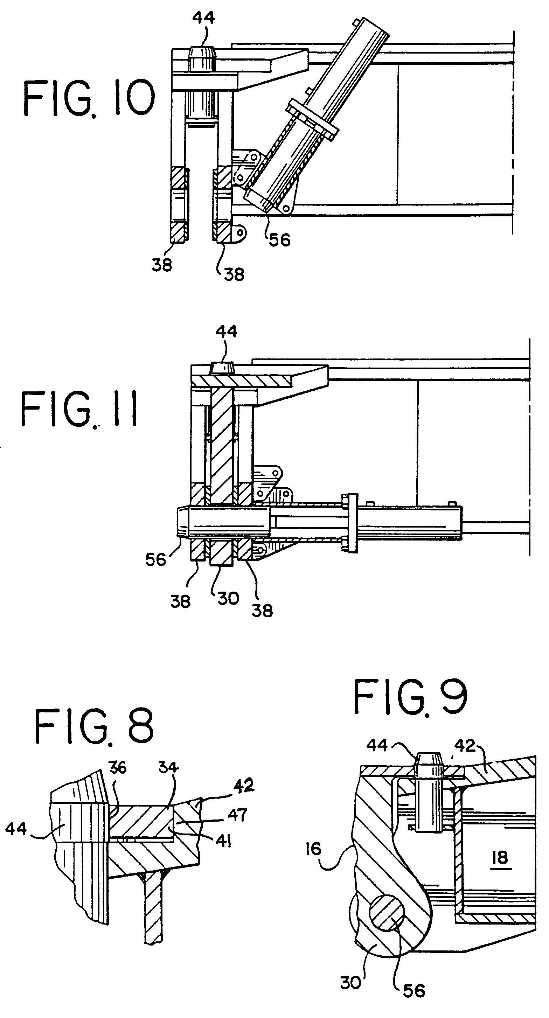

A second embodiment of the carbody-crawler connection of the present invention is shown in FIGS. 8 and 9. This embodiment is very similar to the first embodiment, and thus similar reference numerals are used to identify similar elements. It should be noted that FIGS. 8 and 9 show a mirror-image view compared to FIG. 3. The major difference in the embodiments is that in the second embodiment, the hole 36 in the crawler top plate section 34 is round, rather than elongated. Also, instead of having a shoulder on its bottom surface with a vertical bearing surface, the end 41 of crawler top plate section 34 comprises a bearing surface. The carbody lug 42 has a shoulder 47 on its top surface, with a vertical surface abutting end 41 of crawler top plate section 34.

In either embodiment, once the holes in plates 30 and 38 are aligned, a hydraulically powered pin 56 (FIG. 11) is extended through all of the holes of plates 32 and 38. In a first embodiment, the hydraulically powered pin 56 is attached to the carbody 18. In this configuration the hydraulic lines used to power the pin 56 are connected to the carbody 18 at all times. If desired, the hydraulic pin 56 may be pivoted from a non-engaging position shown in Fig. 10 to an engaging position shown in Fig. 11. Once the pin extends through the holes a straight locking pin (not shown) is inserted through the free end of pin 56 resulting in the carbody 18 and crawler 16 being finally attached. The straight locking pin may be kept in position by a second locking pin (not shown). Although the hydraulic pin is shown with the second embodiment of the present invention (FIGS. 8 and 9), either a fixed or pivoting hydraulic power pin arrangement can be used in conjunction with either of the bearing surface embodiments. (Figs. 3 and 8).

In the locked position the loads are transferred as follows:
1) The shear forces from the crane's self weight and hook loads are carried by the horizontal pin 56.
2) The bending moment caused by the offset between the connection and the centerline of the track is carried by the horizontal pin 56 and the bearing surface 54 or 41 adjacent to the vertical pin 44.
3) Longitudinal shear forces generated by the tractive effort are carried by the vertical pin 44.
4) Turning forces separating the top portion of the joint are carried through the crawler top plate section 34 and into the vertical pin 44.
5) Tensile loads between the carbody 18 and the crawler 16 are carried by vertical pin 44.
6) Compressive loads between the carbody and the crawler 16 are transmitted by flat bearing surface 58.

In addition to the handling of the various forces, the connection between the carbody and the crawler provides for improved mounting of the two elements after being disassembled, particularly in the embodiment of FIGS. 2-7. To reassemble the carbody and the crawler, the crane assembly on the carbody (or less preferred, an assist crane) positions the crawler side frame assembly at a first position. At the first position an attachment device of the crawler 16 such as crawler top plate section 34 engages a stationary pivot point element such as the vertical pin 44 so as to connect the carbody 18 to the crawler 16 in the first position, as shown in FIGS. 6 and 7. The crawler top plate section 34 has a shape such that when section 34 engages pin 44 in the first position, section 34 allows the carbody 18 and crawler 16 to pivot about pin 44 into an operational alignment position (See FIG. 3) from the first position. The elongated hole 36 allows the side assembly to be connected to the carbody when the crawler top plate extension 34 is inclined with respect to the horizontal plane defined by the carbody lug 42. Connection is also ensured when the longitudinal axis of the hole 36 is inclined at an angle with respect to the axis of pin 44. In both cases the amount of inclination ranges from 0 degrees to a maximum of 45 degrees, while the preferred range is from 5 degrees to 15 degrees. The crawler top plate extension 34 and the vertical pin 44 thus have a cooperating shape that ensures that the pin 44 will extend through the crawler extension plate 34 when the carbody and the crawler are positioned with respect to each other at a range of angles from 5 to 45 degrees from their operational position. The crawler top plate section 34 is lowered until the section 34 contacts the top surface of the horizontal carbody lug 42. At this position the crawler 16 is further lowered allowing rotary engagement of the crawler 16 by pivoting under its own weight about pin 44 until stop 39 and stop surface 55 contact each other, at which point crawler top plate section 34 lies on top of horizontal carbody lug 42 and shoulder 37 engages bearing surface 54 at an operational alignment position with respect to the carbody 18. Consequently, the stop surface 55 cooperates with the vertical pin 44 to align the apertures of the plates 30 and 38. Furthermore, vertical pin 44 will be to the far right end (as seen in FIG. 3) of hole 36. In the embodiment of FIGS. 8 and 9, the crawler has to be dropped straight down so that pin 44 goes through circular hole 36 and end 41 bears against shoulder 37. Once in the stopped position (either embodiment) the holes in the cross-plates 30 and 38 are aligned with each other, and the carbody-crawler connection is locked in place by a pin 56.

The above connection process provides many advantages over previous methods. For the first embodiment, for example, the connection is accomplished in a matter of seconds. The reason for the improved connection time is that the 45 degree tolerance in the relative positioning of the carbody and crawler leads to easier connection. In addition, the connection can be accomplished by the crane itself without the use of any outside device.

Thus, while the invention has been described with relation to certain presently preferred embodiments, those skilled in this art will recognize other modifications of the invention which will still fall within the scope of the invention, as expressed in the accompanying claims. For instance, the invention is contemplated to be applicable to crane crawlers where the carbody and crawler are integrally attached to each other. Also, the pin 44 could be attached to the crawler extension plate 34 and go through a hole in the carbody lug 42.

## Claims

1. A crane comprising:
a carbody (18);
a crawler (16) movable with respect to said carbody (18) from a first position relative to said carbody (18), where said crawler (16) initially engages said carbody (18), to an operational position where said crawler (16) engages said carbody (18) and is locked relative to said carbody (18);
said crane characterised by;
a stationary pivot point element (44) attached to either said carbody (18) or said crawler (16);
an attachment device (34) attached either to said carbody (18) or said crawler (16) to which the stationary pivot element (44) is not attached, said attachment device (34) engaging said stationary pivot point element (44) so that said crawler (16) pivots about said stationary pivot point element (44) when moving from said first position to said operational position;
said attachment device (34) comprising a shape such that when said attachment device (34) initially engages said stationary pivot point element (44) in said first position, gravity produces a torque upon said crawler (16) so that said crawler (16) pivots about said stationary pivot point element (44) into said operational position from said first position; and
said attachment device shape allows said first position to be at a range of angles from greater than 5° to 45° from said operational position.

2. The crane of claim 1 characterised in that said attachment device shape allows said first position to be at a range of angles from 5° to 15° from said operational position.

3. The crane of claim 1 characterised in that said stationary pivot point element (44) is attached to said carbody (18) and said attachment device (34) is attached to said crawler (16).

4. The crane of claims 1 or 3 characterised in that said attachment device (34) comprises an elongated opening (36).

5. The crane of claims 1 or 3 characterised in that said stationary pivot point element (44) comprises a vertically extending pin (44).

6. The crane of claim 5 characterised in that said pin (44) has a chamfered shape.

7. The crane of claims 1 or 2 characterised in that said attachment device (34) comprises a horizontal female receiving member (34); and said stationary pivot point element (44) comprises a male attachment device (44) extending through said horizontal female receiving member (34) so that said crawler (16) is connected to said carbody (18).

8. The crane of claim 7, characterised in that a second female receiving member (30) is attached to said crawler (16) and positioned in a plane perpendicular to said first female receiving member (34).

9. The crane of claim 8, characterised in that a third female receiving member (38) is attached to said carbody and aligned with said second female receiving member (30) when said crawler (16) is connected to said carbody (38) in its operational position.

10. The crane of claims 1, 3, 4 or 5 characterised by: a first section (42) attached to said carbody; a second section (34) attached to said crawler (16) and overlapping said first section.

11. The crane of claim 10, characterised in that a bearing surface (58) is formed on mating surfaces of said first and second sections (34, 42).

12. The crane of claim 11, characterised in that said bearing surface (58) is formed on an end portion of the first section (42).

13. The crane of claim 11, wherein said bearing surface (58) is formed on an end portion of said second section (34).

14. The crane of claim 11 when dependent on claim 5, characterised in that said bearing surface (58) is parallel with the axis of said pin (44).

15. The crane of claim 1 characterised in that said attachment device (34) is attached to said crawler (16).

16. The crane of claim 1, characterised in that said stationary pivot point element (44) is attached to said carbody (18).

17. The crane of claim 9 further characterised by a horizontal pin (56) which extends through said second and third female receiving members.

18. The crane of claim 11, characterised in that the vertical pin (44) carries tensile loads between the carbody (18) and the crawler (16) and the bearing surface (58) transmits compressive loads between the carbody (18) and the crawler (16).

19. The crane of claim 9 further characterised by a stop surface (39) which co-operates with said vertical pin attachment to align the second and third female receiving members.

20. The crane of any one of claims 1 to 19 further characterised by a boom (12) supported on said carbody (18) and said crawler (16) comprising a tread (26).

21. A method of attaching a carbody and a crawler to each other wherein said carbody (18) is characterised by a vertical pin (44) and said crawler (16) is characterised by an attachment device (30) having a hole (36) therethrough to engage said pin (44), said method characterised by the steps of: positioning the crawler (16) such that the longitudinal axis of said hole (36) is at an angle ranging from 5° to 45° with respect to said axis of said vertical pin (44); lowering said crawler (16) so that said hole (36) engages said vertical pin (44); continuing to lower said engaged crawler (16), allowing rotary engagement of said crawler (16) into an operational alignment position with respect to said carbody (18).

22. The method of claim 21 further characterised by the step of locking the carbody (18) and crawler (16) at said operational alignment position.

23. The method of claim 22 characterised in that said angle between the axis of the vertical pin (44) and the longitudinal axis of the hole (36) has a value ranging from greater than 5° to 15°.

## Patentansprüche

1. Kran, der umfaßt:
einen Aufbau (18);
eine Raupenkette (16), die in bezug auf den Aufbau (18) aus einer ersten Position in bezug auf den Aufbau (18), in der die Raupenkette (16) zunächst mit dem Aufbau (18) in Kontakt ist, in eine Funktionsposition bewegt werden kann, in der die Raupenkette (16) mit dem Aufbau (18) in Kontakt und in bezug auf den Aufbau (18) arretiert ist;
wobei der Kran gekennzeichnet ist durch:
ein stationäres Drehpunktelement (44), das entweder an dem Aufbau (18) oder an der Raupenkette (16) angebracht ist;
eine Anbringungsvorrichtung (34), die entweder an dem Aufbau (18) oder an der Raupenkette (16) angebracht ist, d.h. dort, wo das stationäre Drehelement (44) nicht angebracht ist, wobei die Anbringungsvorrichtung (34) mit dem stationären Drehpunktelement (44) in Eingriff ist, so daß sich die Raupenkette (16) um das stationäre Drehpunktelement (44) herum dreht, wenn sie sich aus der ersten Position in die Funktionsposition bewegt;
wobei die Anbringungsvorrichtung (34) eine Form umfaßt, die bewirkt, daß, wenn die Anbringungsvorrichtung (34) anfänglich in der ersten Position mit dem stationären Drehpunktelement (44) in Eingriff ist, die Schwerkraft ein Drehmoment auf die Raupenkette (16) erzeugt, so daß sich die Raupenkette (16) um das stationäre Drehpunktelement (44) herum aus der ersten Position in die Funktionsposition dreht; und
es die Form der Anbringungsvorrichtung ermöglicht, daß die erste Position in einem Bereich von Winkeln von mehr als 5° bis 45° gegenüber der Funktionsposition liegt.

2. Kran nach Anspruch 1, **dadurch gekennzeichnet,** daß das es die Form der Anbringungsvorrichtung ermöglicht, daß die erste Position in einem Bereich von Winkeln von 5° bis 15° gegenüber der Funktionsposition liegt.

3. Kran nach Anspruch 1, **dadurch gekennzeichnet,** daß das stationäre Drehpunktelement (44) an dem Aufbau (18) angebracht ist und die Anbringungsvorrichtung (34) an der Raupenkette (16) angebracht ist.

4. Kran nach einem der Ansprüche 1 oder 3, **dadurch gekennzeichnet,** daß die Anbringungsvorrichtung (34) eine längliche Öffnung (36) umfaßt.

5. Kran nach einem der Ansprüche 1 oder 3, **dadurch gekennzeichne**t**,** daß das stationäre Drehpunktelement (44) einen sich vertikal erstreckenden Bolzen (44) umfaßt.

6. Kran nach Anspruch 5, **dadurch gekennzeichnet,** daß der Bolzen (44) eine abgeschrägte Form hat.

7. Kran nach einem der Ansprüche 1 oder 2, **dadurch gekennzeichnet,** daß die Anbringungsvorrichtung (34) ein horizontales Hohlaufnahmeelement (34) umfaßt, und daß das stationäre Drehpunktelement (44) eine Einführanbringungsvorrichtung (44) umfaßt, die sich durch das horizontale Hohlaufnahmeelement (34) so hindurcherstreckt, daß die Raupenkette (16) mit dem Aufbau (18) verbunden ist.

8. Kran nach Anspruch 7, **dadurch gekennzeichnet**, daß ein zweites Hohlaufnahmeelement (30) an der Raupenkette (16) angebracht ist und in sich in einer Ebene senkrecht zu dem ersten Hohlaufnahmeelement (34) befindet.

9. Kran nach Anspruch 8, **dadurch gekennzeichnet,** daß ein drittes Hohlaufnahmeelement (38) an dem Aufbau angebracht und mit dem zweiten Hohlaufnahmeelement (30) fluchtend ist, wenn die Raupenkette (16) in ihrer Funktionsposition mit dem Aufbau (38) verbunden ist.

10. Kran nach einem der Ansprüche 1, 3, 4 oder 5, gekennzeichnet durch: einen ersten Abschnitt (42), der an dem Aufbau angebracht ist, einen zweiten Abschnitt (34), der an der Raupenkette (16) angebracht ist und den ersten Abschnitt überdeckt.

11. Kran nach Anspruch 10, **dadurch gekennzeichnet,** daß eine Tragfläche (58) an Eingriffsflächen des ersten und des zweiten Abschnitts (34, 42) ausgebildet ist.

12. Kran nach Anspruch 11, **dadurch gekennzeichnet,** daß die Tragfläche (58) an einem Endbereich des ersten Abschnitts (42) ausgebildet ist.

13. Kran nach Anspruch 11, wobei die Tragfläche (58) an einem Endbereich des zweiten Abschnitts (34) ausgebildet ist.

14. Kran nach Anspruch 11, wenn abhängig von Anspruch 5, **dadurch gekennzeichnet,** daß die Tragfläche (58) parallel zur Achse des Bolzens (44) ist.

15. Kran nach Anspruch 1, **dadurch gekennzeichnet,** daß die Anbringungsvorrichtung (34) an der Raupenkette (16) angebracht ist.

16. Kran nach Anspruch 1, **dadurch gekennzeichnet,** daß das stationäre Drehpunktelement (44) an dem Aufbau (18) angebracht ist.

17. Kran nach Anspruch 9, des weiteren gekennzeichnet durch einen vertikalen Bolzen (56), der sich durch das zweite und das dritte Hohlaufnahmeelement hindurch erstreckt.

18. Kran nach Anspruch 11, **dadurch gekennzeichnet,** daß der vertikale Bolzen (44) Zuglasten zwischen dem Aufbau (18) und der Raupenkette (16) aufnimmt und die Tragfläche (58) Drucklasten zwischen dem Aufbau (18) und der Raupenkette (16) überträgt.

19. Kran nach Anspruch 9, des weiteren gekennzeichnet durch eine Anschlagfläche (39), die mit der vertikalen Bolzenanbringung zusammenwirkt, um das zweite und das dritte Hohlaufnahmeelement aufeinander auszurichten.

20. Kran nach einem der Ansprüche 1 bis 19, des weiteren gekennzeichnet durch einen Ausleger (12), der von dem Aufbau (18) getragen wird, und daß die Raupenkette (16) eine Lauffläche (26) umfaßt.

21. Verfahren zum Anbringen eines Aufbaues und einer Raupenkette aneinander, wobei der Aufbau (18) durch einen vertikalen Bolzen (44) gekennzeichnet ist und die Raupenkette (16) durch eine Anbringungsvorrichtung (30) mit einem Loch (36) durch selbige hindurch, das mit dem Bolzen (44) in Eingriff ist, gekennzeichnet ist, wobei das Verfahren durch die folgenden Schritte gekennzeichnet ist:
Positionieren der Raupenkette (16), so daß sich die Längsachse des Lochs (36) in einem Winkel, der von 5° bis 45° reicht, in Bezug zu der Achse des vertikalen Bolzens (44) befindet; Absenken der Raupenkette (16), so daß das Loch (36) mit dem vertikalen Bolzen (44) in Eingriff kommt; weiteres Absenken der in Eingriff befindlichen Raupenkette (16), so daß Dreheingriff der Raupenkette (16) in eine Funktionsausrichtposition in bezug auf den Aufbau (18) möglich ist.

22. Verfahren nach Anspruch 21, des weiteren gekennzeichnet durch den Schritt des Arretierens des Aufbaus (18) und der Raupenkette (16) in der Funktionsausrichtposition.

23. Verfahren nach Anspruch 22, **dadurch gekennzeichnet,** daß der Winkel zwischen der Achse des vertikalen Bolzens (44) und der Längsachse des Lochs (36) einen Wert hat, der von mehr als 5° bis 15° reicht.

## Revendications

1. Grue, comprenant :
un châssis (18) de véhicule,
une chenille (16) mobile par rapport au châssis (18) d'une première position par rapport au châssis (18) dans laquelle la chenille (16) est initialement en coopération avec le châssis (18) à une position de fonctionnement dans laquelle la chenille (16) coopère avec le châssis (18) et est bloquée par rapport à ce châssis (18),
la grue étant caractérisée par :
un élément fixe (44) à point formant pivot fixé au châssis (18) ou à la chenille (16),
un dispositif (34) de fixation qui est fixé au châssis (18) ou à la chenille (16) auquel n'est pas fixé l'élément fixe (44) formant pivot, le dispositif de fixation (34) coopérant avec l'élément fixe (44) à point formant pivot de manière que la chenille (16) pivote autour de l'élément fixe (44) à point formant pivot lors du déplacement de la première position à la position de fonctionnement,
le dispositif de fixation (34) ayant une forme telle que, lorsque le dispositif de fixation (34) est initialement en coopération avec l'élément fixe (44) à point formant pivot dans la première position, la force de pesanteur crée un couple agissant sur la chenille (16) d'une manière telle que la chenille (16) pivote autour de l'élément fixe (44) à point formant pivot vers la position de fonctionnement depuis la première position, et
la configuration du dispositif de fixation permet à la première position de se trouver dans une plage d'angles allant de plus de 5° à 45° par rapport à la position de fonctionnement.

2. Grue selon la revendication 1, caractérisée en ce que la configuration du dispositif de fixation permet à la première position de se trouver dans une plage d'angles comprise entre 5° et 15° par rapport à la position de fonctionnement.

3. Grue selon la revendication 1, caractérisée en ce que l'élément fixe (44) à point formant pivot est fixé au châssis (18), et le dispositif de fixation (34) est fixé à la chenille (16).

4. Grue selon la revendication 1 ou 3, caractérisée en ce que le dispositif de fixation (34) comporte une ouverture allongée (36).

5. Grue selon la revendication 1 ou 3, caractérisée en ce que l'élément fixe (44) à point formant pivot comporte une broche (44) disposée verticalement;

6. Grue selon la revendication 5, caractérisée en ce que la broche (44) a une forme chanfreinée.

7. Grue selon la revendication 1 ou 2, caractérisée en ce que le dispositif de fixation (34) comporte un organe femelle horizontal (34) de logement, et l'élément fixe (44) à point formant pivot comporte un dispositif mâle (44) de fixation passant dans l'organe horizontal femelle (34) de logement si bien que la chenille (16) est raccordée au châssis (18).

8. Grue selon la revendication 7, caractérisée en ce qu'un second organe femelle (30) de logement est fixé à la chenille (16) et est positionné dans un plan perpendiculaire au premier organe femelle (34) de logement.

9. Grue selon la revendication 8, caractérisée en ce qu'un troisième organe femelle (38) de logement est fixé au châssis et est aligné sur le second organe femelle (30) de logement lorsque la chenille (16) est raccordée au châssis (38) dans sa position de fonctionnement.

10. Grue selon la revendication 1, 3, 4 ou 5, caractérisée par un premier tronçon (42) fixé au châssis, et un second tronçon (34) fixé à la chenille (16) et recouvrant le premier tronçon.

11. Grue selon la revendication 10, caractérisée en ce qu'une surface d'appui (58) est formée sur les surfaces de coopération des premier et second tronçons (34, 42).

12. Grue selon la revendication 11, caractérisée en ce que la surface d'appui (58) est formée sur une partie d'extrémité du premier tronçon (42).

13. Grue selon la revendication 11, dans laquelle la surface d'appui (58) est formée sur une partie d'extrémité du second tronçon (34).

14. Grue selon la revendication 11 lorsqu'elle dépend de la revendication 5, caractérisée en ce que la surface d'appui (58) est parallèle à l'axe de la broche (44).

15. Grue selon la revendication 1, caractérisée en ce que le dispositif de fixation (34) est fixé à la chenille (16).

16. Grue selon la revendication 1, caractérisée en ce que l'élément fixe (44) à point formant pivot est fixé au châssis (18).

17. Grue selon la revendication 9, caractérisée en outre par une broche horizontale (56) passant dans le second et le troisième organe femelle de logement.

18. Grue selon la revendication 11, caractérisée en ce que la broche verticale (44) encaisse les forces de traction entre le châssis (18) et la chenille (16), et la surface d'appui (58) transmet les forces de compression entre le châssis (18) et la chenille (16).

19. Grue selon la revendication 9, caractérisée en outre par une surface d'arrêt (39) qui coopère avec la fixation à broche verticale pour l'alignement du second et du troisième organe femelle de logement.

20. Grue selon l'une quelconque des revendications 1 à 19, caractérisée en outre par une flèche (12) supportée par le châssis (18), et la chenille (16) comporte une bande de roulement (26).

21. Procédé de fixation d'un châssis de véhicule et d'une chenille l'un à l'autre, selon lequel le châssis (18) est caractérisé par une broche verticale (44) et la chenille (16) est caractérisée par un dispositif de fixation (30) ayant un trou (36) destiné à coopérer avec la broche (44), le procédé étant caractérisé par les étapes suivantes : le positionnement de la chenille (16) afin que l'axe longitudinal du trou (36) forme un angle compris entre 5° et 45° avec l'axe de la broche verticale, l'abaissement de la broche verticale (44), l'abaissement de la chenille (16) afin que le trou (36) coopère avec la broche verticale (44), et la poursuite de l'abaissement de la chenille (16) en coopération, avec mise de la chenille (16) en coopération par rotation en position d'alignement de fonctionnement par rapport au châssis (18).

22. Procédé selon la revendication 21, caractérisé en outre par une étape de blocage du châssis (18) et de la chenille (16) dans la position d'alignement de fonctionnement.

23. Procédé selon la revendication 22, caractérisé en ce que l'angle de l'axe de la broche verticale (44) et de l'axe longitudinal du trou (36) a une valeur comprise entre plus de 5° et 15°.
